(19)

**Europäisches Patentamt**

**European Patent Office**

**Office européen des brevets**

(11) **EP 4 542 509 B1**

(12)**EUROPEAN PATENT SPECIFICATION**

(45) Date of publication and mention
of the grant of the patent:
**08.07.2026 Bulletin 2026/28**

(21) Application number: **23383065.2**

(22) Date of filing: **19.10.2023**

(51) International Patent Classification (IPC):
***G06V 20/10*** *(2022.01)*

(52) Cooperative Patent Classification (CPC):
**G06V 20/176**

(54) **METHOD, SYSTEM AND COMPUTER PROGRAM FOR SELECTING CANDIDATE IMAGES FOR A POWER LINE INSPECTION PROCESS**

VERFAHREN, SYSTEM UND COMPUTERPROGRAMM ZUR AUSWAHL VON KANDIDATENBILDERN FÜR EIN STROMLEITUNGSINSPEKTIONSVERFAHREN

PROCÉDÉ, SYSTÈME ET PROGRAMME INFORMATIQUE POUR SÉLECTIONNER DES IMAGES CANDIDATES POUR UN PROCESSUS D'INSPECTION DE LIGNE ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**23.04.2025 Bulletin 2025/17**

(73) Proprietor: **Fuvex Civil, SL**
**31500 Tudela (ES)**

(72) Inventors:
* **MEDRANO FERNÁNDEZ, Pablo**
**31500 Tudela (ES)**
* **OCHOA LAINEZ, Almudena**
**31500 Tudela (ES)**
* **ALÁEZ GÓMEZ, Daniel**
**31500 Tudela (ES)**
* **PRIETO MÍGUEZ, Manuel**
**31500 Tudela (ES)**
* **SANZ DE AYALA VALENCIA, David**
**31500 Tudela (ES)**

(74) Representative: **Torner, Juncosa I Associats, SL**
**C / Pau Claris, 108, 1r 1a**
**08009 Barcelona (ES)**

(56) References cited:
* **MEDRANO P. ET AL: "UAS: IoT on-line sensors for power line inspection", 2020 IEEE SENSORS, 25 October 2020 (2020-10-25), pages 1 - 4, XP093125539, ISBN: 978-1-7281-6801-2, DOI: 10.1109/SENSORS47125.2020.9278883**
* **BURDZIAKOWSKI PAWEL: "Increasing the Geometrical and Interpretation Quality of Unmanned Aerial Vehicle Photogrammetry Products using Super-Resolution Algorithms", REMOTE SENSING, vol. 12, no. 5, 3 March 2020 (2020-03-03), CH, pages 810, XP093126079, ISSN: 2072-4292, DOI: 10.3390/rs12050810**
* **WONG SHEN YUONG ET AL: "Power Transmission Line Fault Detection and Diagnosis Based on Artificial Intelligence Approach and its Development in UAV: A Review", ARABIAN JOURNAL FOR SCIENCE AND ENGINEERING, SPRINGER BERLIN HEIDELBERG, BERLIN/HEIDELBERG, vol. 46, no. 10, 22 April 2021 (2021-04-22), pages 9305 - 9331, XP037561763, ISSN: 2193-567X, [retrieved on 20210422], DOI: 10.1007/S13369-021-05522-W**

**Description**

**TECHNICAL FIELD**

The present invention generally relates to power lines inspection procedures. In particular, the invention relates to a method, system, and computer program for selecting candidate images for a power line inspection process.

**BACKGROUND OF THE INVENTION**

Power lines are lineal infrastructures which provide electrical power, whenever it is required. Regular inspection of power lines is compulsory in every country, and implies, among others, a visual inspection normally done through the collection of data using optical means (thermal, visual, UV, etc.), which is later analyzed by experts of the electrical company looking for defects (e.g. broken insulators, tower damages, oxide on screws, partially broken cables, etc.). Images are usually captured by personnel walking close to the towers or using a helicopter. Power line inspection means thousands of images that must be reviewed to select the ones that can be used to look for defects on power line assets.

On the other hand, nowadays, Unmanned Aerial Vehicles (UAVs) are becoming popular and are included as an operative tool to inspect power lines. UAVs are a useful tool to capture inspection images, with each UAV flight generating a substantial volume of images. Power lines are typically structured into circuits, with each circuit encompassing anywhere from few tens to hundreds of power towers, interconnected by cables. These circuits are further organized into multiple branches, originating from a power substation, which serves as the point of origin for electricity distribution.

The main goal of power line inspection is to capture high resolution visual images (RGB images), thermal images and LiDAR data of the power towers and the cables between them. There are different infrastructures depending on the voltage they transport, so it is distinguished between high voltage and medium/low voltage.

High voltage lines usually begin at power generation points (hydroelectrical plants, etc.) and transport the electrical power to electrical substations, which usually are the start point of medium power line infrastructures. Present invention particularly considers these medium/low voltage infrastructures, which goal is the distribution of the electricity to the final users.

Some power line inspections solutions are known. One of said solutions is disclosed in document "UAS. IoT on-line sensors for power line inspection", P. Medrano et al., which introduces a decentralized, energy-efficient deep learning-based algorithm designed for power line inspections using drones. The key focus of this system is to continuously keep the inspection target centered, maximizing the visibility of assets in captured images. It achieves this through an onboard deep learning algorithm capable of running in real-time, ensuring its feasibility for drone flights. The primary goal is to precisely position a gimbal during drone operations to obtain optimal images of towers. The system operates in a single-decision criterion process, continuously tracking the tower using a Convolutional Neural Network (CNN). The CNN locates the tower in every frame of a live video stream, and tubelets (a technique for linking detections across frames) are used to process the CNN output.

Given that one of the most time-consuming aspects of power line inspection processes revolves around the selection of candidate images, there is an evident need for the development of enhanced strategies to streamline this task.

**DESCRIPTION OF THE INVENTION**

The present invention proposes, according to one aspect, a computer implemented method for selecting candidate images for a power line inspection process. The method comprises performing by one or more processors the following steps: receiving one or more images of an electricity distribution voltage infrastructure acquired by a camera included in a flying object (e.g. an UAV, a helicopter, an airplane, a zeppelin, etc.); tagging the received one or more images with metadata including GNSS information, for example, the location of the camera when the image is acquired (GPS), and the pose of the camera based on IMU values of the flying object; executing a first-decision criterion that determines whether a GPS location of a power tower is comprised within a 2D projection captured in the image using a list of possible/potential GPS power tower locations and one or more of the following: field-of-view (FOV), the pose, and the GPS location of the camera; executing a second-decision criterion that determines whether a power tower is included in the tagged image by analyzing the tagged image; and selecting or discarding the received one or more images as a candidate image of containing a power tower by executing a ruled based fuzzy decision system that combines a result of the first-decision criterion and of the second-decision criterion.

In some embodiments, the first-decision criterion comprises projecting a triangle according to the FOV of the camera comprising a GPS location of the power tower; delimiting a trapezoid of the GPS location of the power tower by considering a minimum and a maximum distance; computing an angle at which the power tower is with respect to a center of a lens of the camera using the GPS location of the power tower and the delimited trapezoid; and checking whether the delimited trapezoid comprises the GPS location of the power tower based on the computed angle.

The processor(s) receive or access the list of potential GPS power tower locations. Nevertheless, these locations might not be entirely accurate. Thus, a further validation of those locations needs to be done.

In some embodiments, before the second-decision criterion is executed, the method comprises enhancing the resolution of the tagged image using a deep neural network. In this case, the enhanced image is used as input to the second-decision criterion.

In some embodiments, the deep neural network is based on the ESRGAN algorithm.

In some embodiments, the second-decision criterion comprises applying a deep neural network, for instance, the Yolo algorithm.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Consequently, present invention provides a novel rule based expert system to select candidate images, in the sense that they will be analyzed to look for defects in power lines assets. The expert system combines geometrical information and artificial intelligence algorithms to select candidate images.

Additionally, the data validation process can be visualized on a web application, or the like, to analyze the results of the automatic system whenever it is required.

The proposed process reduces the review process to select candidate images by 95% of the time compared with the manual review.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 is a diagram showing a power line inspection process, according to an embodiment.

Fig. 2 is a diagram showing the proposed architecture for selecting candidate images for a power line inspection process, according to an embodiment.

Fig. 3 graphically illustrates how the first-decision criterion is calculated, according to an embodiment.

Fig. 4 graphically illustrates the fuzzy decision system architecture, according to an embodiment.

## DETAILED DESCRIPTION OF THE INVENTION AND OF PREFERRED EMBODIMENTS

Present invention provides an expert system for high efficiency data validation. As explained before, the present invention particularly considers medium/low voltage infrastructures, which goal is the distribution of the electricity to the final users. Starting at a power substation there are multiple medium/low voltage infrastructures, which in the following are called "circuit". Each circuit is a medium/low voltage infrastructure composed of a set of power towers joined by a set of cables. The circuit starts at a substation and ends at a transformation center, which is the connection point to the final users.

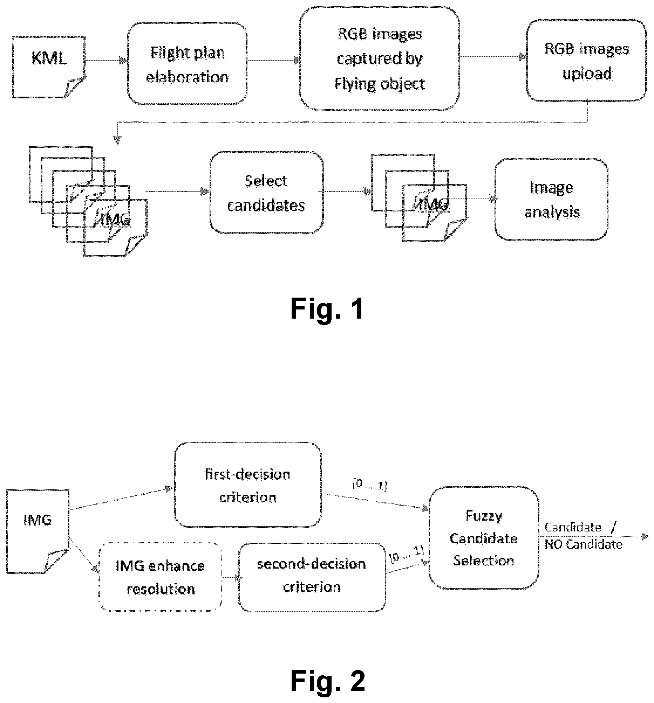

Particularly, the present invention focuses the attention of the power line inspection process on visual and thermal images. The final goal is to provide the final user (i.e. the user that analyzes the images looking for defects on electrical assets) with a set of images containing towers (image candidates), which are later used to analyze power line assets like insulators, cable connections, etc. Fig. 1 shows a simplified version of the power line inspection analysis.

As high resolution image capture is the main goal of the flying object such as a UAV, a helicopter, etc., power line inspection begins with the flight plan elaboration. The input of the process is a file such as a Geographical Information System (GIS), KML, shapefile, etc. that contains power tower locations of different circuits. The planning process is out of the scope of this invention, but the result of the planning is a flight plan satisfying: (i) flying object flies close to the power tower (in average, 30 m in horizontal and 40 m in the vertical of the power tower); and (ii) flying object flies parallel to the cables.

Next, the flying object flies to capture images, for instance, RGB images. The camera starts shooting from the beginning until the flying object lands. Images can be stored in SD cards, or in other alternative storing means. When the flying object lands, the stored images can be uploaded to a server, or the like, with Internet connection. Then, it is required to select candidate images from the whole set of images captured by the flying object. The output of the inspection process is a set of candidate images to be used for analysis purpose (look for defects on them).

With reference to Fig. 2, therein an embodiment of the proposed architecture for selecting candidate images is illustrated. Particularly, the present invention combines a first-decision geometric criterion using the information of the flying object attitude during the flight and camera parameters like FOV, and a second-decision AI criterion. Each criterion by itself it is not enough to select candidates with high accuracy (> 95%). In order to reach the desired accuracy, the present invention also integrates a rule based fuzzy decision system to integrate both components as a multiple classifier.

On one side, the flying object carries a camera as payload to take pictures. This camera is fixed at the structure of the flying object pointing about 40º down in the direction of the flight. The captured images are tagged with the IMU and GPS values of the flying object, so that knowing the FOV of the camera, it is possible to use the pose and location of the image to calculate geometrically whenever the image could contain the power tower. This first-decision criterion provides an output between 0 and 1 representing the proximity of the power tower to the center of the image calculated geometrically if flight conditions were perfect.

However, in real scenarios there are many practical problems resulting in that geometric based decisions are not a perfect alternative to solve the problem of candidate images selection. In this case, it has been found that GNSS standalone signal has an error that could be of 1 to 5 meters, and it depends on weather conditions. Another unexpected error is that power tower location is not accurate, with errors of 5 to 20 meters, and even in some circuits there is not power tower at the given location. Finally, another difficulty is related with the wind speed and direction. When the flight plan is built, it is not considered the wind, it assumed everything goes fine, but the presence of wind means that the flying object attitude changes. As the flying object flies 40 meters from the power tower, small variations on angle could derive in camera points to a different angle as estimated in the flight plan, having the effect of losing the power tower in the image.

On the other side, in the particular embodiment of Fig. 2, the second-decision criterion comprises a two-step decision path. First step provides a deep neural network based on the ESRGAN algorithm to enhance image resolution. Such image is the input to a deep neural network based on Yolo to detect power towers in the tagged image. The output is a value between 0 and 1, that represents the degree of confidence in a tower detection in the tagged image. In any case, it should be noted that in other embodiments, the enhancement resolution component is not included.

Both decision criterions give a fuzzified output that is used in a fuzzy based decision system (Fuzzy Candidate Selection). The inputs are degree of power tower centered in the image (first-decision criterion), and the confidence in the detection of a power tower in the image (second-decision criterion). The fuzzy system is derived from experts' knowledge.

First-decision criterion

Captured images contains a set of metadata which provide GNSS information: GPS location when the camera captures the image, and the pose of the camera at this time instant based on the IMU values of the flying object carrying the camera.

Using above information, it is possible to evaluate the pointing direction of the camera and, considering its FOV, the 2D projection captured in the image. As images should have a minimum resolution, distance is a relevant factor to classify images as valid (or not valid) to look for failures in following steps of the power line inspection process.

The first-decision (or geometry fast check) is a simple geometry 2D test based on two parameters, *TDistFromPict,* and *TAngleFromPict,* which disregards the effects of orography and UAS/gimbal attitude.

*TDistFromPict* is the planar distance in meters between the coordinates where an image was taken and the coordinates of any power tower.

*TAngleFromPict* is the planar angle between the 2D vector that indicates the direction where the camera is pointing when taking any given picture, and a 2D vector that joins the coordinates where that image was taken and the coordinates of a power tower.

The value of this check is evaluated for each image:

*dmin <= TDistFromPict <= dmax,* where dmin is the minimum distance at which the power tower may be captured, and *dmax* is the maximum distance at which the power tower may also be captured,

*TAngleFromPict < camera_FOV / 2 +* alpha, where *camera_FOV* is the horizontal field of view of the camera, and *alpha* is a correction factor.

*dmin* and *dmax* can be conservatively estimated from the height of the flight *UAS_h,* the height of the power tower (*asset_h*), and the pitch of the camera (*pitch*) and its vertical FOV *(v_FOV)*

$$dmin = (UAS\_h / \sin(pitch + v\_FOV/2)) * \cos(pitch + v\_FOV/2)$$

$$dmax = ((UAS\_h - asset\_h) / \sin(pitch - v\_FOV/2)) * \cos(pitch - v\_FOV/2).$$

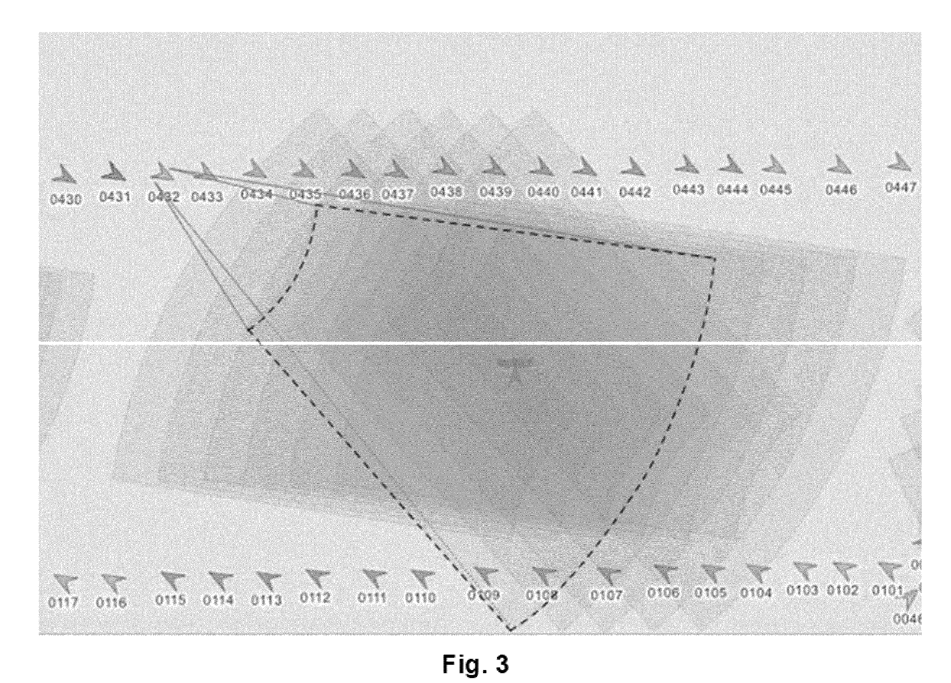

Fig. 3 graphically shows an embodiment on how the first-decision criterion is calculated. The image shows the arrowheads representing the GPS location where the image was taken and the direction in which the camera was pointing according to the IMU data.

Valid images is a set that contains images captured by the camera inside the FOV of the camera, at a distance greater than a minimum value, lower that the maximum required to have a good resolution for image analysis of failures, and with high probability to contain a power tower. A degree of pertinence to the valid set of images is considered and determined by estimating the position of the power tower respect the central point of the image.

As the location of the power tower is known, and images are tagged with the camera pose, it is possible to estimate the angle between the central point of the camera and the power tower. Particularly, this angle is mapped to a value between 0 and 1, and termed *geometric_degree*. This value represents how far from the central point the power tower is in the image. That is, in case the power tower location is estimated in the center of the image, angle is 0º, then the *geometric_degree* of the image is 1. In case the power tower position is estimated at the border of the image (FOV), a *geometric_degree* of 0 is considered. The *geometric_degree* is also considered 0 in case the power tower is estimated out of the FOV/2.

*Tower_Angle* = estimated angle between the central point of the camera and the power tower.

$$geometric\_degree = \begin{cases} 0 & if\ Tower\_Angle > FOV/2 \\ \dfrac{FOV/2 - abs(Tower\_Angle)}{FOV/2} & if\ Tower\_Angle \leq FOV/2 \end{cases}$$

Second-decision criterion

As explained before, the second-decision criterion can be based on two deep neural networks. Within the first step, the resolution of the input image is enhanced. Then, another neural network classifies the enhanced image as containing a power tower, or not.

Particularly, both deep neural networks are trained. In some embodiments, a dataset with more than 1500 images is used to train the classification neural network and the enhancement resolution neural network. The dataset can be publicly available.

Classification of towers

In order to classify images, the Yolo5 algorithm can be used. In this case, the most important objective is to reduce to zero the number of false positives. In order to trust on the system and allow an automatic processing, users have to trust totally on the neural network because provide the reinforcement to the first-decision criterion. It does not matter if a power tower is not detected, the most critical event is that power towers are detected when there is not any power tower on the image (false positive).

In this case, the training process, image selection, and threshold selection can be guided with the objective to reduce to zero the number of false positives.

Expert system design

Both criteria by themselves are not enough to solve the problem of candidate images selection. The second-criterion assigns to the input image a degree of pertinence to the class of image containing power towers, but it is not reliable at hundred percent. It is possible to detect power towers in images without one of them (false positive), and loss a power tower in an image containing it (false negative). The precision of the second-criterion depends on neural network training. However, it is impossible to be sure neural networks provide an accuracy of 100% because the input image could contain a new kind of power tower not trained at all, or illumination conditions are not included in the training, etc.

The first-decision criterion assumes that the GPS location of the power tower, and the GPS location of the camera and IMU values are correct. However, GPS position has an error in the order of meters, and it is impossible to ensure a perfect synchronization of the IMU values with the time when the image was taken.

Considered that above criteria are not enough whenever they are considered alone, a set of rules to reinforce the decision of both systems is provided. The fuzzy decision system is proposed to give a final output which combines both criteria.

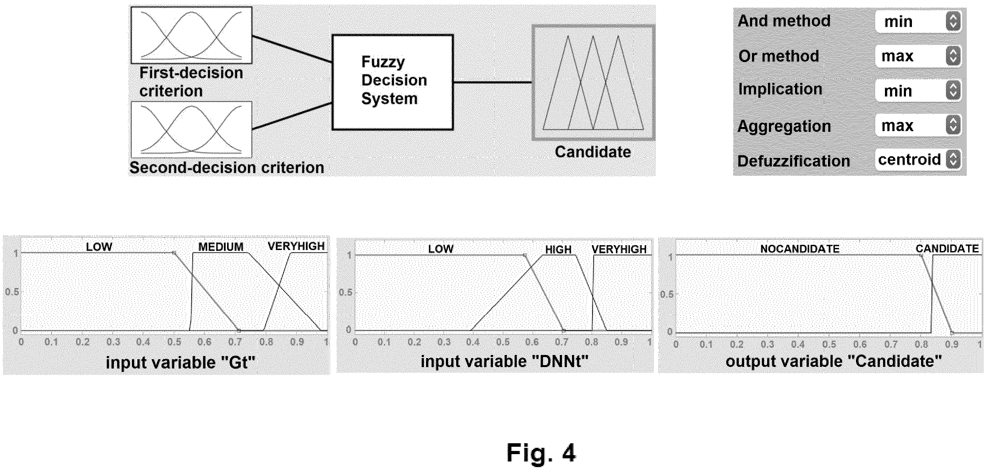

Each criterion is modeled as an input variable of the fuzzy decision system. The output of each criterion is a value between 0 and 1, which provides the fuzzification of the input variable. The output is a variable to establish the character of Candidate/NO Candidate for each input image. Fig. 4 shown an example of the fuzzy decision system architecture.

The first-decision criterion is modeled as input variable Gt, which represents how centered is the power tower in the image. This value is higher (close to 1) whenever the power tower is close to the central point of the image. The second-decision criterion is modeled with variable DNNt. It represents the degree of pertinence of the image to the class of images containing at least one power tower. Candidate is the output variable which tag the input image as a candidate image or not a candidate.

List of rules of the fuzzy decision system

An example of the decision rules is listed below. It shows that the defined rules are very strict to select an input as a candidate image. Only rules 6, 8 and 9 provide options for an input image to be considered as candidate image. In these three cases, only when one of the criteria has a high certainty value, the image could be considered as candidate.

1. If (Gt is LOW) and (DNNt is LOW) then (Candidate is NOCANDIDATE) (1)
2. If (Gt is LOW) and (DNNt is HIGH) then (Candidate is NOCANDIDATE) (1)
3. If (Gt is LOW) and (DNNt is VERYHIGH) then (Candidate is NOCANDIDATE) (1)
4. If (Gt is MEDIUM) and (DNNt is LOW) then (Candidate is NOCANDIDATE) (1)
5. If (Gt is MEDIUM) and (DNNt is HIGH) then (Candidate is NOCANDIDATE) (1)
6. If (Gt is MEDIUM) and (DNNt is VERYHIGH) then (Candidate is CANDIDATE) (1)
7. If (Gt is VERYHIGH) and (DNNt is LOW) then (Candidate is NOCANDIDATE) (1)
8. If (Gt is VERYHIGH) and (DNNt is HIGH) then Candidate is CANDIDATE) (1)
9. If (Gt is VERYHIGH) and (DNNt is VERYHIGH) then (Candidate is CANDIDATE) (1)

In an embodiment, in case both criteria provide values equal or lower than 0,5, input images are not considered candidate. However, high values for both criteria at the same time select the input image as candidate. In another embodiment, in case only one criterion has a high degree of certainty, it is required that the other criteria be high.

The fuzzy decision system is designed to reduce false positive candidates, and to automatize the process as much as possible.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**Claims**

1. A computer implemented method for selecting candidate images for a power line inspection process, the method comprising performing by one or more processors the following steps:

receiving an image of an electricity distribution voltage infrastructure acquired by a camera included in a flying object;
tagging the received image with GNSS metadata including a GPS location of the camera when the image is acquired and a pose of the camera based on IMU values of the flying object;
executing a first-decision criterion that determines whether a GPS location of a power tower is comprised within a 2D projection captured in the image using at least one of: a field-of-view, FOV, the pose, and the GPS location of the camera, and a list of possible GPS power tower locations;

executing a second-decision criterion that determines whether a power tower is included in the tagged image by analyzing the tagged image;

selecting or discarding the received image as a candidate image of containing a power tower by executing a ruled based fuzzy decision system that combines a result of the first-decision criterion and of the second-decision criterion.

2. The method of claim 1, wherein the first-decision criterion comprises:

projecting a triangle according to the FOV of the camera comprising a GPS location of the power tower;

delimiting a trapezoid of the GPS location of the power tower by considering a minimum and a maximum distance;

computing an angle at which the power tower is with respect to a center of a lens of the camera using the GPS location of the power tower and the delimited trapezoid; and

checking whether the delimited trapezoid comprises the GPS location of the power tower based on the computed angle.

3. The method of any one of the previous claims, comprising enhancing a resolution of the tagged image before the execution of the second-decision criterion is performed using a deep neural network, the enhanced image being the input of the second-decision criterion.

4. The method of claim 3, wherein the deep neural network is based on the ESRGAN algorithm.

5. The method of any one of the previous claims, wherein the second-decision criterion comprises applying a deep neural network.

6. The method of claim 5, wherein the deep neural network is based on the Yolo algorithm.

7. The method of any one of the previous claims, wherein the flying object comprises an unmanned aerial vehicle, a helicopter, a zeppelin, or an airplane.

8. A system for selecting candidate images for a power line inspection process, comprising:

a memory or database configured to store one or more images of an electricity distribution voltage infrastructure, the images being acquired by a camera included in a flying object;

one or more processors configured to:

tag the one or more images with GNSS metadata including a GPS location of the camera when the image is acquired and a pose of the camera based on **IMU** values of the flying object;

execute a first-decision criterion that determines whether a GPS location of a power tower is comprised within a 2D projection captured in the image by using at least one of: a field-of-view, FOV, the pose, and the GPS location of the camera, and a list of possible GPS power tower locations;

execute a second-decision criterion that determines whether a power tower is included in the tagged image using the tagged image; and

select or discard the one or more images as a candidate image of containing a power tower by executing a ruled based fuzzy decision system that combines a result of the first-decision criterion and of the second-decision criterion.

9. The system of claim 8, wherein the flying object comprises an unmanned aerial vehicle, a helicopter, a zeppelin, or an airplane.

10. A non-transitory computer readable medium comprising code instructions that when executed by a computing device implement the method of any of claims 1 to 7.

**Patentansprüche**

1. Computerimplementiertes Verfahren zur Auswahl von Kandidatenbildern für ein Stromleitungsinspektionsverfahren, wobei das Verfahren das Durchführen der folgenden Schritte durch einen oder mehrere Prozessoren umfasst:

Empfangen eines Bildes einer Stromverteilungsspannungsinfrastruktur, das durch eine in einem fliegenden Objekt enthaltene Kamera aufgenommen wird;

Markieren des empfangenen Bildes mit GNSS-Metadaten, die einen GPS-Standort der Kamera zum Zeitpunkt der Bildaufnahme sowie eine Pose der Kamera basierend auf den IMU-Werten des fliegenden Objekts enthalten;

Ausführen eines ersten Entscheidungskriteriums, das bestimmt, ob ein GPS-Standort eines Strommasts in einer im Bild erfassten 2D-Projektion umfasst ist, unter Verwendung mindestens eines von: einem Sichtfeld, FOV, der Pose und dem GPS-Standort der Kamera und einer Liste möglicher GPS-Standorte von Strommasten;

Ausführen eines zweiten Entscheidungskriteriums, das durch Analyse des markierten Bildes bestimmt, ob ein Strommast im markierten Bild enthalten ist;

Auswählen oder Verwerfen des empfangenen Bildes als ein Kandidatenbild, das einen Strommast enthält, durch Ausführen eines regelbasierten Fuzzy-Entscheidungssystems, das ein Ergebnis des ersten Entscheidungskriteriums und des zweiten Entscheidungskriteriums kombiniert.

2. Verfahren nach Anspruch 1, wobei das erste Entscheidungskriterium Folgendes umfasst:

Projizieren eines Dreiecks gemäß dem FOV der Kamera, umfassend einen GPS-Standort des Strommasts;

Abgrenzen eines Trapezoids des GPS-Standorts des Strommasts unter Berücksichtigung einer minimalen und einer maximalen Entfernung;

Berechnen eines Winkels, in dem sich der Strommast in Bezug auf den Mittelpunkt einer Linse der Kamera befindet, unter Verwendung des GPS-Standorts des Strommasts und des abgegrenzten Trapezoids; und

Prüfen, ob das abgegrenzte Trapezoid den GPS-Standort des Strommasts umfasst, basierend auf dem berechneten Winkel.

3. Verfahren nach einem der vorhergehenden Ansprüche, umfassend das Verbessern einer Auflösung des markierten Bildes vor der Durchführung des zweiten Entscheidungskriteriums unter Verwendung eines tiefen neuronalen Netzwerkes, wobei das verbesserte Bild die Eingabe des zweiten Entscheidungskriteriums ist.

4. Verfahren nach Anspruch 3, wobei das tiefe neuronale Netzwerk auf dem ESRGAN-Algorithmus basiert.

5. Verfahren nach einem der vorhergehenden Ansprüche, wobei das zweite Entscheidungskriterium das Anwenden eines tiefen neuronalen Netzwerks umfasst.

6. Verfahren nach Anspruch 5, wobei das tiefe neuronale Netzwerk auf dem Yolo-Algorithmus basiert.

7. Verfahren nach einem der vorhergehenden Ansprüche, wobei das fliegende Objekt ein unbemanntes Luftfahrzeug, einen Hubschrauber, einen Zeppelin oder ein Flugzeug umfasst.

8. System zur Auswahl von Kandidatenbildern für ein Stromleitungsinspektionsverfahren, umfassend:

einen Speicher oder eine Datenbank, die dazu konfiguriert ist, ein oder mehrere Bilder einer Stromverteilungsspannungsinfrastruktur zu speichern, wobei die Bilder durch eine in einem fliegenden Objekt enthaltene Kamera aufgenommen werden;

einen oder mehrere Prozessoren, die zu Folgendem konfiguriert sind:

Markieren des einen oder der mehreren Bilder mit GNSS-Metadaten, die einen GPS-Standort der Kamera zum Zeitpunkt der Bildaufnahme sowie eine Pose der Kamera basierend auf den IMU-Werten des fliegenden Objekts enthalten;

Ausführen eines ersten Entscheidungskriteriums, das bestimmt, ob ein GPS-Standort eines Strommasts in einer im Bild erfassten 2D-Projektion umfasst ist, unter Verwendung mindestens eines von: einem Sichtfeld, FOV, der Pose und dem GPS-Standort der Kamera und einer Liste möglicher GPS-Standorte von Strommasten;

Ausführen eines zweiten Entscheidungskriteriums, das unter Verwendung des markierten Bildes bestimmt, ob ein Strommast im markierten Bild enthalten ist; und

Auswählen oder Verwerfen des einen oder der mehreren Bilder als ein Kandidatenbild, das einen Strommast enthält, durch Ausführen eines regelbasierten Fuzzy-Entscheidungssystems, das ein Ergebnis des ersten Entscheidungskriteriums und des zweiten Entscheidungskriteriums kombiniert.

9. System nach Anspruch 8, wobei das fliegende Objekt ein unbemanntes Luftfahrzeug, einen Hubschrauber, einen Zeppelin oder ein Flugzeug umfasst.

10. Nicht-transitorisches, computerlesbares Medium, umfassend Codeanweisungen, die, wenn sie von einer Computervorrichtung ausgeführt werden, das Verfahren nach einem der Ansprüche 1 bis 7 implementieren.

**Revendications**

1. Procédé mis en œuvre par ordinateur pour sélectionner des images candidates pour un processus d'inspection de ligne électrique, le procédé comprenant l'exécution par un ou plusieurs processeurs des étapes suivantes :

recevoir une image d'une infrastructure de distribution de tension électrique acquise par une caméra incluse dans un objet volant ;
étiqueter l'image reçue avec des métadonnées GNSS comprenant une position GPS de la caméra lors de l'acquisition de l'image et une pose de la caméra basée sur des valeurs IMU de l'objet volant ;
exécuter un premier critère de décision qui détermine si une position GPS d'un pylône électrique est comprise dans une projection 2D capturée dans l'image en utilisant au moins l'un parmi : un champ de vision, FOV, la pose, et la position GPS de la caméra, et une liste de positions GPS possibles de pylônes électriques ;
exécuter un second critère de décision qui détermine si un pylône électrique est inclus dans l'image étiquetée en analysant l'image étiquetée ;
sélectionner ou rejeter l'image reçue comme image candidate contenant un pylône électrique en exécutant un système de décision flou basé sur des règles qui combine un résultat du premier critère de décision et du second critère de décision.

2. Procédé selon la revendication 1, dans lequel le premier critère de décision comprend :

projeter un triangle selon le FOV de la caméra comprenant une position GPS du pylône électrique ;
délimiter un trapèze de la position GPS du pylône électrique en considérant une distance minimale et une distance maximale ;
calculer un angle auquel se trouve le pylône électrique par rapport à un centre d'une lentille de la caméra en utilisant la position GPS du pylône électrique et le trapèze délimité ; et vérifier si le trapèze délimité comprend la position GPS du pylône électrique sur la base de l'angle calculé.

3. Procédé selon l'une quelconque des revendications précédentes, comprenant l'amélioration d'une résolution de l'image étiquetée avant l'exécution du second critère de décision en utilisant un réseau de neurones profond, l'image améliorée étant l'entrée du second critère de décision.

4. Procédé selon la revendication 3, dans lequel le réseau de neurones profond est basé sur l'algorithme ESRGAN.

5. Procédé selon l'une quelconque des revendications précédentes, dans lequel le second critère de décision comprend l'application d'un réseau de neurones profond.

6. Procédé selon la revendication 5, dans lequel le réseau de neurones profond est basé sur l'algorithme Yolo.

7. Procédé selon l'une quelconque des revendications précédentes, dans lequel l'objet volant comprend un véhicule aérien sans pilote, un hélicoptère, un zeppelin ou un avion.

8. Système pour sélectionner des images candidates pour un processus d'inspection de ligne électrique, comprenant :

une mémoire ou une base de données configurée pour stocker une ou plusieurs images d'une infrastructure de distribution de tension électrique, les images étant acquises par une caméra incluse dans un objet volant ;
un ou plusieurs processeurs configurés pour :

étiqueter la ou les images avec des métadonnées GNSS comprenant une position GPS de la caméra lors de l'acquisition de l'image et une pose de la caméra basée sur des valeurs IMU de l'objet volant ;
exécuter un premier critère de décision qui détermine si une position GPS d'un pylône électrique est comprise dans une projection 2D capturée dans l'image en utilisant au moins l'un parmi : un champ de vision, FOV, la pose, et la position GPS de la caméra, et une liste de positions GPS possibles de pylônes électriques ;

exécuter un second critère de décision qui détermine si un pylône électrique est inclus dans l'image étiquetée en utilisant l'image étiquetée ; et

sélectionner ou rejeter la ou les images comme image candidate contenant un pylône électrique en exécutant un système de décision flou basé sur des règles qui combine un résultat du premier critère de décision et du second critère de décision.

9. Système selon la revendication 8, dans lequel l'objet volant comprend un véhicule aérien sans pilote, un hélicoptère, un zeppelin ou un avion.

10. Support d'enregistrement lisible par ordinateur non transitoire comprenant des instructions de code qui, lorsqu'elles sont exécutées par un dispositif informatique, mettent en œuvre le procédé selon l'une quelconque des revendications 1 à 7.

KML → Flight plan elaboration → RGB images captured by Flying object → RGB images upload

IMG → Select candidates → IMG → Image analysis

# Fig. 1

IMG → first-decision criterion → [0 ... 1] → Fuzzy Candidate Selection → Candidate / NO Candidate

IMG → IMG enhance resolution → second-decision criterion → [0 ... 1] → Fuzzy Candidate Selection

# Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. MEDRANO**. *UAS. IoT on-line sensors for power line inspection*